# EUROPEAN PATENT APPLICATION

(11) **EP 3 373 195 A1**
(43) Date of publication of application: **12.09.2018**
(21) Application number: 17465506.8
(22) Date of filing: 06.03.2017
(51) Int. Cl.: G06K 9/00, G06K 9/46

(54) **DEVICE FOR DETERMINING A CRACK ON AND/OR WITHIN A VEHICLE WINDSCREEN**

(71) Applicant: Continental Automotive GmbH, 30165 Hannover (DE)
(72) Inventor: Stanciu, Ion Rares, 307395 Sag (RO); Radu, Petru, 300692 Timisoara (RO)
(74) Representative: Reuter, Andreas

(57) **Abstract**

The present invention relates to a device (10) for determining a crack on and/or within a vehicle windscreen. It is described to provide (210) a processing unit (30) with at least one image, the at least one image relating to a scene external to a vehicle viewed through a windscreen of the vehicle. The at least one image comprises colour image data. The processing unit represents (220) at least one portion of a plurality of portions of the at least one image as a plurality of colour space planes. The plurality of colour space planes corresponds to a plurality of degrees of focus in the at least one portion of the at least one image. The processing unit determines (230) that a crack exists on and/or within the windscreen on the basis of a colour distribution within at least one colour space plane of a portion of the plurality of portions at a degree of focus of the plurality of degrees of focus. An output unit (40) outputs (240) information that a crack exists on and/or within the windscreen.

## Description

### FIELD OF THE INVENTION

The present invention relates to a device for determining a crack on and/or within a vehicle windscreen, to a system for determining a crack on and/or within a vehicle windscreen, to a method for determining a crack on and/or within a vehicle windscreen, as well as to a computer program element.

### BACKGROUND OF THE INVENTION

The general background of this invention is the field of driving systems that determine if a windscreen of a vehicle is cracked or dirty.

US8274562 describes a camera for identifying soiling on a protective screen. The camera is focused on a scene behind the protective screen and can be used to identify soiling and for other applications, e.g. to identify driving lanes and/or to identify objects. Soiling is identified by evaluating frames recorded in succession. It is described that a prerequisite for a successful measurement is that the relative speed of the camera and of at least one recorded object in the surroundings is not equal to zero and its trajectory is predicted in the depiction. By comparing the relevant frame sections, possible soiling on subregions of the protective screen is identified.

There is a need to provided a technique for determining cracks and dirt on a vehicles windscreen that is not predicated on a speed of travel of the vehicle.

### SUMMARY OF THE INVENTION

It would be advantageous to have improved apparatus for determining driving warning information.

The object of the present invention is solved with the subject matter of the independent claims, wherein further embodiments are incorporated in the dependent claims. It should be noted that the following described aspects and examples of the invention apply also for the device for determining a crack on and/or within a vehicle windscreen, the system for determining a crack on and/or within a vehicle windscreen, the method for determining a crack on and/or within a vehicle windscreen, and for the computer program element.

According to a first aspect, there is provided a device for determining a crack on and/or within a vehicle windscreen, comprising:
- n input unit;
- a processing unit; and
- an output unit.

The input unit is configured to provide the processing unit with at least one image. The at least one image relates to a scene external to a vehicle viewed through a windscreen of the vehicle. The at least one image comprises colour image data. The processing unit is configured to represent at least one portion of a plurality of portions of the at least one image as a plurality of colour space planes. The plurality of colour space planes correspond to a plurality of degrees of focus in the at least one portion of the at least one image. The processing unit is configured to determine that a crack exists on and/or within the windscreen on the basis of a colour distribution within at least one colour space plane of the at least one portion of the plurality of portions at a degree of focus of the plurality of degrees of focus. The output unit is configured to output information that a crack exists on and/or within the windscreen.

In other words, images are represented in a manner similar to CIELab colour space, where in CIELab colour space an image is represented as a number of stacked planes each at different luminance (L) where each plane has axes (a) and (b), where axis (a) represents red at one extreme and green at the other, and axis (b) represents yellow at one extreme and blue at the other. However, here for crack determination on and/or within a windscreen, rather than stacking the image as (ab) planes of different luminance, representative colour space planes are stacked as a function of degrees of focus in the image rather than different luminances. Here a "degree of focus" can also be termed "a degree or level of blurriness". Thus blurriness instead of light intensity is used for crack detection in a windscreen.

In other words, a crack or dirty part of a windscreen can be detected on the basis of one or more "blurry" or out-of-focus areas in an image acquired through a windscreen of a vehicle in combination with the colour in that image. Thus normal in car cameras, which generally focus at infinity and do not focus on the windscreen, can be utilised in order to detect cracks on and/or within windscreens by detecting blurry areas in acquired imagery in combination with the colour, where images coming from the colour camera are being used. It is to be noted, that a crack external to a vehicle in an outer lens covering of a camera that is acquiring imagery or indeed of a lens of the camera itself can be detected in this manner. In other words, the windscreen of the vehicle can be a windscreen such as a transparent outer cover of a camera that is being used to acquire the imagery

To put this another way, the device detects and signalizes a crack windscreen/windshield for a vehicle, that is located in a camera' s field of view. Thus already existing vehicle cameras can be utilized, that are collecting imagery outside of the car, to detect cracked windscreens.

In this way, a notification can be given that remedial action should be taken due to the windscreen being cracked or potentially cracked. In an example, a crack can be determined to exist in the same portion in more than one image, enabling a determination to be made that there is a crack with an increased level of confidence. In an example, images could be separated by a time period during which the windscreen was washed, and if the crack remain at the same portion of the image a notification with a particular high degree of confidence can be given that there is likely to be a crack in the windscreen. However, a driver need not be notified and the car systems could log the information, or transmit to a service centre, in order that remedial action can be taken at an appropriate time.

In an example, representing the at least one portion as a plurality of colour space planes comprises dividing the at least one portion into n segments; and wherein a determination is made if each segment of the n segments is unfocussed or in focus.

In other words, a portion of the image can be divided for example into 4 sub-segments, for example 16x16 pixels each. A determination can then be made if a segment is blurry or not (in focus or unfocussed). Therefore, on this binary determination there are provided with 5 colour space planes with different degrees of focus for the portion as a whole, ranging from 4 segments that are blurry, 3 segments that are blurry, 2 segments that are blurry 1 segment that is blurry, and 0 segments that are blurry. The situation that none of the segments are blurry is not particularly important, because there is unlikely to be a crack in the windscreen at the corresponding region of the windscreen leading to this image portion. This process of providing n+1 colour space planes having different degrees of focus however provides a computationally efficient way to analyse and process data, utilising a binary determination of blurriness for each segment of the portion. If, the portion was divided into n = 16 segments, then there would be 17 levels of degrees of focus for the portion as a whole, and the portion can be divided into any number of segments, and if n was 2 there would be 3 degrees of focus etc.

In an example, each one of the plurality of colour space planes is partitioned into a plurality of clusters. In this way, by partitioning a colour plane into zones the required computations are reduced.

In an example, the degree of focus of the at least one colour space plane is at a least degree of focus of the plurality of degrees of focus. In other words, this colour space plane is characterised by the most blurred data. Imagery acquired at a region associated with a windscreen that has a crack tends to be blurred and out of focus. In this manner, by separating the imagery into different levels of degrees of focus, the colour distribution within a colour space plane that has a level of focus that is most likely to indicate that a crack exists can be interrogated before other colour planes at higher degrees of focus are interrogated. This provides for computational efficiency, as less data needs to be analysed.

However, other colour space planes than that associated with the most blurry data can need to be processed because for example noise in the system can lead to a blurry portion to move vertically up and down through the stack of colour space planes having different degrees of focus. For example, a portion can be segmented into 4 segments, then having 5 degrees of focus extending from all 4 segments being blurry none of the segments being blurry. In one image a portion may have all four segments satisfying the blurry qualification, and be categorized as 100% blurry and the portion sits in the top most colour space plane. However, noise in the system may lead one of those segments to now be determined not to be blurry. There are then 3 out of 4 segments that satisfy the blurry qualification, and the portion can be categorized as 75% blurry and the potion sits in the next to top colour space plane. Other factors that can lead to data associated with a crack not being in the top most (least in focus or most blurry) colour space plane are: the size of the crack in relation to the image portion being analysed associated with light that has passed through the windscreen at the position of the crack; the crack type (long crack, star type4, sun type etc, with the long crack being the most difficult to detect); weather conditions (sun glaring, rain, snow etc); the background, which can range from a summer blue sky with no edges to a background of trees for example. In such conditions, from frame to frame, a specific block (or segment of the portion) may be blurry and then not blurry then again blurry, etc. even if the light and background does not change. This is due to the noise present in the image. When only blocks of the crack region changes blurriness state (the light direction does not change - so colour modification is small and due to the image noise) the portion moves up and down the colour space planes.

In an example, the at least one image comprises a first image and a second image. A crack is determined to exist on and/or within the windscreen on the basis of a first colour distribution within a first colour space plane of a first portion of the plurality of portions at a first degree of focus of the plurality of degrees of focus in the first image and on the basis of a second colour distribution within a second colour space plane of a second portion of the plurality of portions at a second degree of focus of the plurality of degrees of focus in the second image. A first position on the windscreen that correlates with the first portion in the first image is substantially the same as a second position on the windscreen that correlates with the second portion in the second image.

In other words, it can be determined that a crack exists on and/or in a windscreen if more than one image has the same area within which a crack has been determined to exist. The first and second images can be acquired by the same camera but with appropriate compensation between images can be acquired by different cameras. This means that a leaf landing on the windscreen and blowing away or a fly landing and flying off does not lead to the determination that there is a crack. In this manner, a degree of confidence that there is a crack on the windscreen can be provided.

Thus a crack stays in the same position in the image when acquired with one camera and this correlates with the same position on the windscreen, or when more than one camera is used the crack is associated with different regions in the two images but each of these regions correlate with the same region on the windscreen. The background image changes, and this can be used in helping to determine that there is a crack or not.

In other words, the first image and second image need not be acquired by the same camera. A first camera could have a field of view where a crack causes a blurry area in the top right of the image and a second camera could have a field of view where the same crack causes a blurry area in the top left of the image. However, each image from each camera can have spatial areas that correlate with spatial areas of the windscreen, and in this way it can be determined that the same region in the windscreen is causing the blurring. Also, in this way the effect of a rain drop causing blurring in images, but with the position of the blurring moving as the drop runs down the windscreen does not lead to a notification that the windscreen is cracked for example.

In an example, the first degree of focus of the plurality of degrees of focus in the first image is the same as the second degree of focus of the plurality of degrees of focus in the second image. In other words, the colour space plane in the first portion is at the same degree of focus as the second portion.

In an example, the first colour distribution is substantially the same as the second colour distribution. In other words, the colour distribution within the first image is the same as the colour distribution in the second image, with the colour distribution being indicative of a crack on and/or within the windscreen at a position that corresponds to the first and second portions in the first and second images.

In an example, each of the plurality of colour space planes of the at least one portion of the first image is partitioned into a plurality of clusters, and each of the plurality of colour space planes of the at least one portion of the second image is partitioned into the plurality of clusters. The processing unit is configured to determine a position of a cluster of the first colour space plane that has a first colour distribution value in that cluster that is greater than an average value of the colour distributions in the other clusters of the first space plane. The processing unit is configured to determine a position of a cluster of the second colour space plane that has a second colour distribution value in that cluster that is greater than an average value of the colour distributions in the other clusters of the second space plane. The processing unit is configured to determine that a crack exists on and/or within the windscreen on the basis that the position of the cluster of the first colour space plane that has a high value is the same as the position of the cluster of the second colour space plane that has a high value.

In other words, a crack is determined to exist in and/or on a windscreen when imagery that has been viewed through the windscreen at the position of the crack has a colour distribution that is the same in two image portions acquired by one or more in vehicle cameras. The two colour distributions in the two image portion can be at the same degree of focus, but need not be. For example, noise in the system could lead to a cluster associated with a crack moving from one colour space plane at one degree of focus to another colour space plane at another degree of focus, but if the lighting conditions are substantially the same in both images the colour distribution associated with the crack will stay substantially the same. In other words, the cluster associated with the crack can move vertically up or down through the stack of colour space planes.

To put this another way, any image is accompanied by noise. Daylight and weather conditions may also affect the signal to noise ratio. In case of a blurred region the signal to noise ratio may be lower than normal. In such case, some of the blocks (or segments of a portion) may toggle between blurry and not blurry (because of the noise), and as such the portion as a whole changes from one colour space plane having one degree of focus to another colour space plane having a different degree of focus. If considering the stacked colour space plane structure (which can be considered to be similar to a Rubik's cube, where each horizontal level has a degree of focus and individual cubes at a horizontal level represent a colour distribution having that degree of focus), then portion moves up and down in the blurred planes (in the same regions - as the colours do not change). Looking only at these regions / volumes (a top-down view) means that the image noise can also be filtered out (in the case in which the colour does not change - meaning that the light direction does not change). This provides an additional validation check.

In an example, each of the plurality of colour space planes of the at least one portion of the first image is partitioned into a plurality of clusters, each cluster comprising more than one pixel. Each of the plurality of colour space planes of the at least one portion of the second image is partitioned into the plurality of clusters. The processing unit is configured to determine a plurality of colour distribution values of the plurality of clusters of the colour space planes of the at least one portion of the first image, wherein one value is associated with one cluster. The processing unit is configured to determine a plurality of colour distribution values of the plurality of clusters of the colour space planes of the at least one portion of the second image, wherein one value is associated with one cluster. The processing unit is configured to determine that a crack exists on and/or within the windscreen on the basis of at least one cluster value of the plurality of clusters of the colour space planes of the at least one portion of the first image and on the basis of at least one cluster value of the plurality of clusters of the colour space planes of the at least one portion of the second image.

In this way, when there is a crack a relatively small number of the clusters can indicate that a crack is present in a windscreen. For example, colour distribution values can be concentrated in 1, 2, 3, or 4 of the 12 cluster partitions. If the illumination conditions change from one image to the next, for example as the vehicle is turning such that sunlight enters the windscreen at different angles, then the colour distributions values can again be concentrated in the same number of cluster partitions. However, due to the change in illumination conditions there can be a change in the colour distributions associated with the crack, such that the colour distributions values are not concentrated in the same clusters. But, because the cluster values are mainly concentrated in the same number of few clusters this can be used to indicate with a degree of confidence that there is a crack in the windscreen. In other words, when changing the colour, portions having a certain degree of blurriness can remain in the same colour space plane but move to other region (s) of that colour space plane. However, as long as the light direction does not change, they can remain in the same colour space plane regions.

According to a second aspect, there is provided a system for determining a crack on and/or within a vehicle windscreen, comprising:
- at least one camera; and
- a device for determining a crack on and/or within a vehicle windscreen according to the first aspect.

The at least one camera is configured to be located within a vehicle and the at least one camera is configured to acquire the at least one image relating to a scene external to the vehicle viewed through the windscreen of the vehicle.

In this manner, a camera based system is provided for a car, that can make use of existing cameras or use bespoke cameras that are looking at scenes outside of the car with the cameras focussed on infinity, and the system enables the detection of cracks on the windscreen.

According to a third aspect, there is provided a method for determining a crack on and/or within a vehicle windscreen, comprising:
a) providing a processing unit with at least one image, the at least one image relating to a scene external to a vehicle viewed through a windscreen of the vehicle, and wherein the at least one image comprises colour image data;
b) representing with the processing unit at least one portion of a plurality of portions of the at least one image as a plurality of colour space planes, wherein the plurality of colour space planes corresponds to a plurality of degrees of focus in the at least one portion of the at least one image;
c) determining with the processing unit that a crack exists on and/or within the windscreen on the basis of a colour distribution within at least one colour space plane of a portion of the plurality of portions at a degree of focus of the plurality of degrees of focus; and
d) outputting with an output unit output information that a crack exists on and/or within the windscreen.

According to another aspect, there is provided a computer program element controlling apparatus as previously described which, when the computer program element is executed by a processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for determining a crack on and/or within a vehicle windscreen;
Fig. 2 shows a schematic set up of an example of a system for determining a crack on and/or within a vehicle windscreen;
Fig. 3 shows a method for determining a crack on and/or within a vehicle windscreen;
Fig. 4 shows an example of CIELab colour space where a colour space plane at a particular luminance is shown;
Fig. 5 shows the partitioning of an ab plane within CIEBab colour space, where in CIEBab colour space ab planes at different levels of blurriness and not luminance are represented;
Fig. 6 shows a stack of ab planes having different degrees of blurriness within CIEBab colour space;
Fig. 7 shows a block and a region in an image plane;
Fig. 8 shows an example of noise leading to the toggling between ab planes having different degrees of blurriness;
Fig. 9 shows schematic representations of examples of types of cracks; and
Fig. 10 shows examples of edges of interest that can be analysed in order to determine an image's blurriness.

### DETAILED DESCRIPTION OF EMBODIMENTS

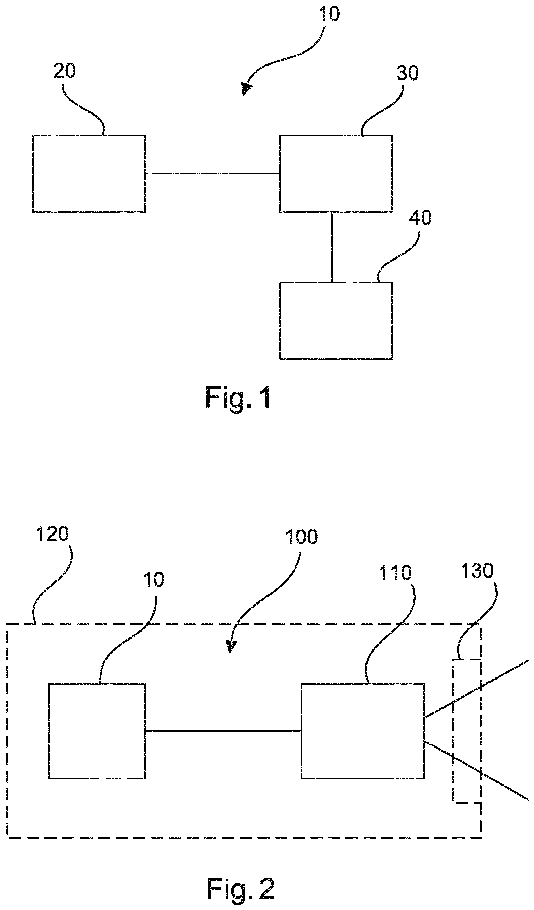

Fig. 1 shows an example of a device 10 for determining a crack on and/or within a vehicle windscreen. The device comprises an input unit 20, a processing unit 30, and an output unit 40. The input unit 20 is configured to provide the processing unit with at least one image, via wired or wireless communication. The at least one image relates to a scene external to a vehicle viewed through a windscreen of the vehicle. The at least one image comprises colour image data. The processing unit 30 is configured to represent at least one portion of a plurality of portions of the at least one image as a plurality of colour space planes. The plurality of colour space planes corresponds, or correspond, to a plurality of degrees of focus in the at least one portion of the at least one image. The processing unit 30 is configured to determine that a crack exists on and/or within the windscreen on the basis of a colour distribution within at least one colour space plane of the at least one portion of the plurality of portions at a degree of focus of the plurality of degrees of focus. The output unit 40 is configured to output information that a crack exists on and/or within the windscreen.

In an example, degrees of focus are calculated in images through use of a Haar wavelet transform. In an example, the colour image data is in the Bayer image format. In an example, the Haar wavelet transform is utilised to detect blurry pixel blocks in an image, which can also be referred to as clusters. Thus a cluster can be a region formed from blocks. In an example, calculation of degrees of focus comprises a determination of a measure of local gradients and/or a measure of the sharpness of features in different spatial areas of the image. In an example, calculation of degrees of focus comprises utilisation of an edge detection algorithm. In an example, calculation of degrees of focus comprises utilisation of a point spread function applied over different spatial areas of the image. In an example, calculation of degrees of focus comprises utilisation of a Fourier transform or Fast Fourier transform applied over different spatial areas of the image. In an example, calculation of degrees of focus comprises utilisation of a Gaussian Laplace filter over different spatial areas of the image. In other words, as the image has been acquired by a camera that is not focussed on the windscreen but is configured to view the scene outside of the vehicle, the outside scene will be characterised by features that are in focus and as such have sharp edges, strong gradients etc. However, a region of the image where the windshield/windscreen is cracked or dirty will suffer to a certain extent "blur" or be out of focus, and will be characterised by edges that are not as sharp as to be found in other image areas and gradients that are not as strong as in other image areas. The processing unit then uses image processing algorithms to analyses areas of the image, at an appropriate spatial scale, to determine degrees of focus in the image. This determination can be self contained, in that the determination can be made on the basis of the analysis of that region, or the determination can be made taking into account the analysis in other image areas. Thus, not only can an absolute measure of "blur" be made to determine if there is a crack or dirty area in a region of the windscreen, but a relative measure can be made on the basis of how blurry this region is in relation to other regions.

In an example, the processing unit is configured to determine if the region of interest within the windscreen relates to a crack or dirt on the basis of structure within the out of focus (blurry) region. Light is scattered as it goes through a crack leading to structure within the blurry region, and detection of this structure can be used to indicate if the blurry region relates to a crack or to an area of dirt on the windshield.

In an example, there are two degrees of focus. In an example, there are three degrees of focus. In an example, there are four degrees of focus. In an example, there are five degrees of focus. In an example, there are ten degrees of focus. In an example, there are twenty degrees of focus. In an example, there are forty degrees of focus. In an example, there are one hundred degrees of focus. In an example, there are a number of degrees of focus greater than or equal to six and less than or equal to one hundred.

In an example, an absolute measure of the degree of focus (or blurriness) in a portion of the image is determined, for example from a determination of the number of edges in that region. Then, the degree of focus (or degree or level of focus) can have numerous values, such that there are a correspondingly numerous number of potential colour space planes.

In the following discussion within a windscreen also means on a windscreen, and thus can relate to a crack that has structure on the surface of the windscreen and within the glass itself, but can also relate to dirt that is on the surface of the windscreen.

In an example, the portion is 16x16 pixels in dimension. In an example, the at least one image was acquired by at least one camera that was not focussed on the windscreen of the vehicle. Thus in this manner, standard vehicle cameras that are viewing scenes external to the vehicle as part of navigation and/or safety systems, or as part of automatic driving systems can also be utilised to determine if a vehicle's windscreen is cracked and/or is dirty.

According to an example, representing the at least one portion as a plurality of colour space planes comprises dividing the at least one portion into n segments. A determination is then made by the processing unit if each segment of the n segments is unfocussed or in focus.

In an example, the degree of focus (degree or level of blurriness) is expressed as a percentage between 0-100%.

According to an example, each one of the plurality of colour space planes is partitioned into a plurality of clusters.

In an example, the colour space plane is partitioned into twelve clusters.

According to an example, the degree of focus of the at least one colour space plane is at a least degree of focus of the plurality of degrees of focus.

According to an example, the at least one image comprises a first image and a second image. A crack is determined to exist on and/or within the windscreen on the basis of a first colour distribution within a first colour space plane of a first portion of the plurality of portions at a first degree of focus of the plurality of degrees of focus in the first image and on the basis of a second colour distribution within a second colour space plane of a second portion of the plurality of portions at a second degree of focus of the plurality of degrees of focus in the second image. A first position on the windscreen that correlates with the first portion in the first image is substantially the same as a second position on the windscreen that correlates with the second portion in the second image.

In an example, a plurality of cameras can be utilised to have different fields of view through a vehicles windscreen, thereby covering more area of the windscreen. In an example, a plurality of cameras can be utilised to view the scene external to a vehicle through different regions of a vehicle's windscreen, that could overlap. Thus, first and second images will generally be from the same camera, but with appropriate compensation can be from different cameras, but the overall scene viewed by the plurality of cameras is through a large area of the windscreen thereby enabling cracks to be detected over that large area.

In an example, a third, fourth, fifth, xth image can be analysed to determine if there is a blurry region, and in this way if the out of focus region (region of blur) is found in increasing numbers of images a confidence level that there is a crack or dirty area can be increased accordingly.

In an example, the first portion in the first image is at the same position as the second portion in the second image. In other words, the first image and second image are acquired by the same camera.

According to an example, the first degree of focus of the plurality of degrees of focus in the first image is the same as the second degree of focus of the plurality of degrees of focus in the second image.

According to an example, the first colour distribution is substantially the same as the second colour distribution.

According to an example, each of the plurality of colour space planes of the at least one portion of the first image is partitioned into a plurality of clusters, and each of the plurality of colour space planes of the at least one portion of the second image is partitioned into the plurality of clusters. The processing unit is configured to determine a position of a cluster of the first colour space plane that has a first colour distribution value in that cluster that is greater than an average value of the colour distributions in the other clusters of the first space plane. The processing unit is configured to determine a position of a cluster of the second colour space plane that has a second colour distribution value in that cluster that is greater than an average value of the colour distributions in the other clusters of the second space plane. The processing unit is configured to determine that a crack exists on and/or within the windscreen on the basis that the position of the cluster of the first colour space plane that has a high value is the same as the position of the cluster of the second colour space plane that has a high value.

According to an example, each of the plurality of colour space planes of the at least one portion of the first image is partitioned into a plurality of clusters, each cluster comprising more than one pixel. Each of the plurality of colour space planes of the at least one portion of the second image is partitioned into the plurality of clusters, with each cluster comprising more than one pixel. The processing unit is configured to determine a plurality of colour distribution values of the plurality of clusters of the colour space planes of the at least one portion of the first image, wherein one value is associated with one cluster. The processing unit is configured to determine a plurality of colour distribution values of the plurality of clusters of the colour space planes of the at least one portion of the second image, wherein one value is associated with one cluster. The processing unit is configured to determine that a crack exists on and/or within the windscreen on the basis of at least one cluster value of the plurality of clusters of the colour space planes of the at least one portion of the first image and on the basis of at least one cluster value of the plurality of clusters of the colour space planes of the at least one portion of the second image.

In an example, each of the plurality of colour space planes of the at least one portion of the first image is partitioned into a plurality of clusters, each cluster comprising more than one block. In an example, each of the plurality of colour space planes of the at least one portion of the second image is partitioned into the plurality of clusters, with each cluster comprising more than one block.

In an example, the values of clusters can be used to indicate if a cluster is associated with a crack. For example, in the case where there are 12 clusters in a particular space colour plane (at a degree of focus) a determination can be made that the values of two of those clusters are significant, for example being significant larger than the values in the other clusters. In one image frame this provides an indication that there may be a crack in the windscreen associated with the imagery of the portion of the image being analysed. In the next image frame, again two clusters can be flagged as having significant values, and this provides an increased confidence level that there is indeed a crack. This also applied for a third and forth image, where if there are again the same number of significant clusters it can be determined with ever increasing confidence that there is a crack. In an example, a threshold can be set as the number of consecutive image frames within which the same number of clusters having significant values is present, for example 2, 3, 4, or 5 or other numbers of consecutive image frames. If the irradiation conditions do not change then it can be expected that the for the same noise levels the clusters having significant values will remain in the same position in a colour space plane, however if the irradiation conditions change then the clusters can move to different "coloured" regions of the colour spaced plane, but there would continue to be the same number of clusters having a significant value. Thus, a determination can be made that there is a crack with increased degrees of confidence based on more than one image frame even when lighting conditions change. If there is noise in the system, such that a data associated with a portion of the image moves to a different colour space plane (having a different degree of focus) the analysis can continue by in effect following the clusters having significant values as they also move up and down through the colour space planes as well as around a colour space plane.

In other words, if the light direction changes, for example due to the car turning or due to driving under trees in strong sunlight or driving at night under street lights or in a tunnel the blurry blocks can change colour (at least for some of the blocks). With respect to the stacked colour space planes, having parallelepipeds of different colour distribution and degrees of focus, this translates into moving from some parallelepipeds to other parallelepipeds due to colour change. Therefore, for example a number of clusters can have significant values and a detection algorithm through thresholding the number of parallelepipeds in imagery can indicate that a crack is present in the windscreen with a required degree of confidence. In other words the detection algorithm is robust to the light direction change (such a change may happen relatively fast due to the street lightning which may generate a change as the car moves under the poles).

In an example, the device comprises a database 50, the database containing at least one image data associated with at least one crack in a screen. In other words, knowledge of how cracks cause blurring of images and the representative colour space distributions at different degrees of focus can be used to aid in the determination that there is a crack. Image processing can be used to compare reference imagery with different types of cracks to the imagery being acquired in order to determine with better confidence whether there is a crack, and indeed what type of crack the windscreen has. Crack types that propagate more quickly that other crack types can then be notified more robustly to the driver of the vehicle, indicating that remedial action is immediately required and if necessary that the car should not be driven further.

In an example, the at least one image data is representative of at least one view through the screen having the at least one crack in the screen.

Information on windscreen cracks can be found at http://www.carwindshields.info/car-windshield-stress-cracks, and http://www.carwindshields.info/windshield-crack-types.

In an example, the at least one crack is any one of: a star crack; a partial bullseye crack; a sun crack; a chip crack; a long crack.

Fig. 2 shows an example of a system 100 for determining a crack on and/or within a vehicle windscreen. The system 100 comprises at least one camera 110 and a device 10 for determining a crack on and/or within a vehicle windscreen as described with reference to Fig. 1. The at least one camera 110 is configured to be located within a vehicle 120 and the at least one camera 110 is configured to acquire the at least one image relating to a scene external to the vehicle viewed through the windscreen 130 of the vehicle.

In an example, the at least one camera 110 is the input unit 20. In an example, the device 10 is located within the vehicle. However, image data could be sent from the camera to a device that is external to the vehicle, such as in a centralised vehicle depot, and imagery processed there can be used to indicate if the vehicle has a cracked windshield.

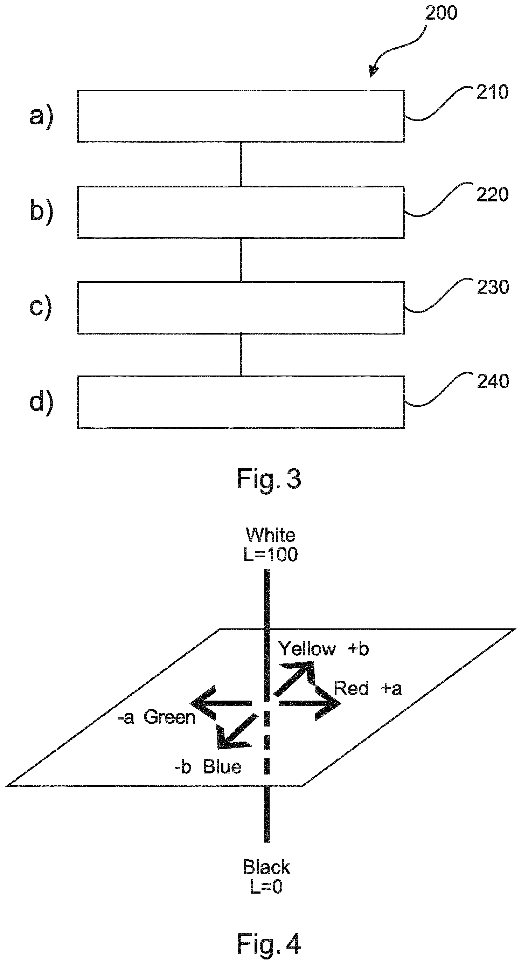

Fig. 3 shows a method 200 for determining a crack on and/or within a vehicle windscreen in its basic steps. The method 200 comprises:
in a providing step 210, also referred to as step a), providing a processing unit 30 with at least one image, the at least one image relating to a scene external to a vehicle viewed through a windscreen of the vehicle, and wherein the at least one image comprises colour image data;
in a representing step 220, also referred to as step b), representing with the processing unit at least one portion of a plurality of portions of the at least one image as a plurality of colour space planes, wherein the plurality of colour space planes corresponds to a plurality of degrees of focus in the at least one portion of the at least one image;
in a determining step 230, also referred to as step c), determining with the processing unit that a crack exists on and/or within the windscreen on the basis of a colour distribution within at least one colour space plane of the at least one portion of the plurality of portions at a degree of focus of the plurality of degrees of focus; and
in an outputting step 240, also referred to as step d), outputting with an output unit 40 output information that a crack exists on and/or within the windscreen.

In an example, step b) comprises dividing the at least one portion into n segments; and wherein a determination is made if each segment of the n segments is unfocussed or in focus.

In an example, each one of the plurality of colour space planes is partitioned into a plurality of clusters, each cluster comprising more than one pixel.

In an example, the degree of focus of the at least one colour space plane is at a least degree of focus of the plurality of degrees of focus.

In an example, the at least one image comprises a first image and a second image. A crack is determined to exist on and/or within the windscreen on the basis of a first colour distribution within a first colour space plane of a first portion of the plurality of portions at a first degree of focus of the plurality of degrees of focus in the first image and on the basis of a second colour distribution within a second colour space plane of a second portion of the plurality of portions at a second degree of focus of the plurality of degrees of focus in the second image. A first position on the windscreen that correlates with the first portion in the first image is substantially the same as a second position on the windscreen that correlates with the second portion in the second image. In other words, a part (or portion) of a first image is determined to have image data that indicates that there is a crack in the windscreen (windshield, or camera cover) in a position that corresponds to that part of the image. That there is indeed a crack, can be verified (or determined with greater confidence) when a second image acquired has image data at the same part of the image to the first image, that also indicates that there is a crack in the windscreen in the position that corresponds to that part of the image.

In an example, the first portion in the first image is at the same position as the second portion in the second image.

In an example, the first degree of focus of the plurality of degrees of focus in the first image is the same as the second degree of focus of the plurality of degrees of focus in the second image.

In an example, the first colour distribution is substantially the same as the second colour distribution.

In an example, each of the plurality of colour space planes of the at least one portion of the first image is partitioned into a plurality of clusters, each cluster comprising more than one pixel. Each of the plurality of colour space planes of the at least one portion of the second image is also partitioned into the plurality of clusters, each cluster comprising more than one pixel. step c) then comprises determining a position of a cluster of the first colour space plane that has a first colour distribution value in that cluster that is greater than an average value of the colour distributions in the other clusters of the first space plane. Step c) also then comprises determining a position of a cluster of the second colour space plane that has a second colour distribution value in that cluster that is greater than an average value of the colour distributions in the other clusters of the second space plane. Step c) then comprises determining that the position of the cluster of the first colour space plane that has a high value is the same as the position of the cluster of the second colour space plane that has a high value.

In an example, each of the plurality of colour space planes of the at least one portion of the first image is partitioned into a plurality of clusters, each cluster comprising more than one pixel. Each of the plurality of colour space planes of the at least one portion of the second image is also partitioned into the plurality of clusters, each cluster comprising more than one pixel. Step c) can then comprise determining a plurality of colour distribution values of the plurality of clusters of the colour space planes of the at least one portion of the first image, wherein one value is associated with one cluster. Step c) can also comprise determining a plurality of colour distribution values of the plurality of clusters of the colour space planes of the at least one portion of the second image, wherein one value is associated with one cluster. Step c) then comprises determining that a crack exists on and/or within the windscreen on the basis of at least one cluster value of the plurality of clusters of the colour space planes of the at least one portion of the first image and on the basis of at least one cluster value of the plurality of clusters of the colour space planes of the at least one portion of the second image.

The device, system and method are now described in further detail with respect to Figs. 4-10.

The algorithm used in the device, system and method uses a so-called super-pixel type concept to detect a crack in the car's windscreen (cracks in other vehicle windscreens or windshields can be detected). The algorithm has an analogy with the CIELab concept, where an image is analysed to determine clusters of pixels with similar properties. CIELab will first be introduced, and then it will be explained how this concept has been transformed in order to detect tracks in windscreens.

Fig. 4 shows an example of CIELab colour space where a colour space plane at a particular luminance is shown. In CIELab colour space, image data is represented in volume space. At each luminance level "L" a colour space plane is represented having axis "a" with green at one extreme and red at the other extreme, and the colour space plane at that luminance level has an orthogonal axis "b" with blue at one extreme and yellow at the other extreme. A whole series of "ab" planes are then stacked on top of each other at different luminance "L" levels. Thus, the colour and intensity information in an image is represented within this "L*a*b" colour space volume. CIE stands for "Commission Internationale de l'Eclairage". Thus, the CIELab color space is composed of parallel planes denoted by L (L specifies the intensity; L=100 represents white, while L = 0 denotes black for the example shown in Fig. 4) including pixels with luminance values close to one another (a single such plane is depicted in Fig. 4). Therefore, each plane contains all possible colors at a given luminance value L. Pixels in each plane are clustered based on the "a" and "b" parameters which categorizes the pixel's color.

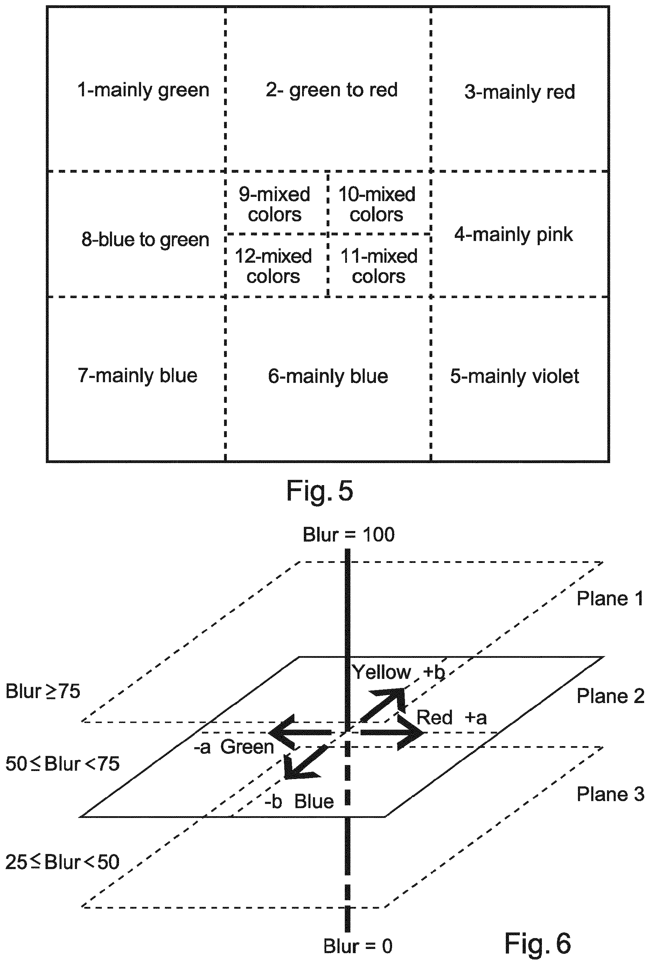

However, in the present device, system and method an algorithm is used that processes imagery such that rather than presenting colour space planes (ab planes) at different luminances, in the present algorithm blurriness (or degree of focus or unfocus) in an image is determined for areas of an image and colour space planes are presented as a function of different blurriness levels. One such colour space plane at a blurriness level (or degree of focus) is shown in Fig. 5. Each ab plane is then partitioned into clusters (or areas) such that a cluster represents a "relatively" uniform colour. The partitioning of the ab plane is application-dependant and is determined empirically. For the cracked windshield (windscreen) detection, these ab planes are divided into 12 clusters, as shown in Fig. 5, although an ab plane can be divided into different numbers of clusters, for example 9, 16, 25, 49 etc. Further details on the division of an ab colour space plane into clusters can be found in: Ciobanu, A, Costin, M., & Barbu, T., (2013), Image Categorization Based on Computationally Economic LAB Colour Features, Soft Computing Applications. V. E. Balas, J. Fodor, A. R. V Várkonyi-Kóczy, J. Dombi and L. C. Jain, (pp. 585-593). Berlin Heidelberg. The result is a segmented image where pixels with characteristics that are close to one another are clustered together.

Therefore, as shown in Fig. 6 the degrees of blurriness are used instead of degrees of light intensity or luminance (L) for windscreen crack detection, where colour space planes (ab planes) at different degrees of focus (or blurriness) are used. This enables blurred regions in an image to be grouped in different colour space planes to where non-blurred regions in that image are grouped, for an image scene viewed through a vehicle's windscreen. It is to be noted that an onboard vehicle camera that views a scene outside the vehicle is utilized, where that camera is focused towards infinity - in other words it is not focused on the windscreen but is set up to image objects outside the vehicle.

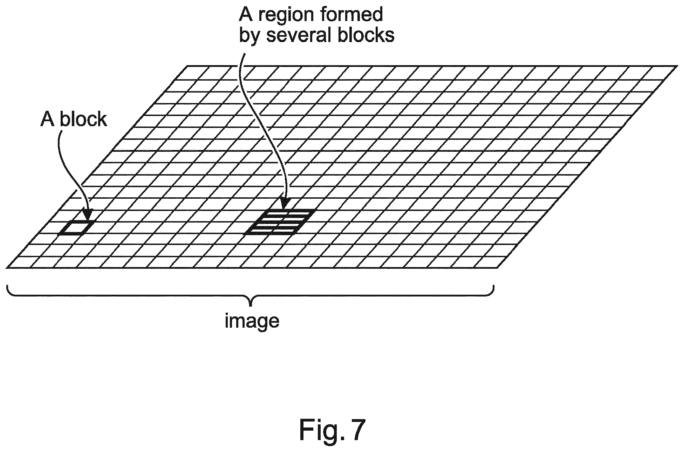

Fig. 7 shows a block and a region in an original image plane, thus having features such as the road and objects at the side of the road and vehicles, and which has been viewed through the vehicle's windscreen. This represents just one possible example. Thus, an already existent car camera is used to detect windshield cracks, and can be used to differentiate cracks from dirt areas on the windshield. The camera is focused on infinity, and can be an in car camera that forms part of the navigation, safety, automatic driving system that requires that the environment around the car be imaged. In the present device, method and system for detecting the crack in the windshield, imagery acquired by the camera is passed to a processor or processing unit, and an algorithm (image processing algorithm) is used to detect for windshield cracks. The algorithm detects blurry persistent image areas, and distinguishes between a crack and other optical disturbances. Due to the fact that the cameras focus on infinity, cracks in the windshield situated in the field of view of the camera appear as a blurry region on an image acquired by the camera, with a blurry region in the image correlating with the position of the crack in the windshield at the position within the field of view. Other artifacts on the windscreen, such as dirt, will lead to a blurriness in the image but that blurriness is different than that associated with a crack, and therefore a crack can be differentiated from dirt on the windscreen. This is because of brightness transitions that take place for a crack, when there is a change in the lighting conditions such as a change in the light angle of incidence. The acquired image has rows and columns of pixels governed by the size of the detector. As such, various sizes of sensor can be used leading to different sizes of images in relation to the numbers of pixels, and the image need not be square in terms of the number of pixels in each dimension. The image is separated into blocks 16x16 pixels in extent, and thus the image is divided into a number of blocks. The algorithm works on the 16x16 pixel blocks, but blocks of different sizes can be utilized. The algorithm identifies which blocks have blurry pixel areas and is therefore a blurry block and which blocks are not blurry. If a crack is detected, or dirt is detected the driver can be advised to clean the car's windshield or have a crack repaired on a windscreen replaced. Thus a stream of images (coming from the same camera, but that could be coming from different cameras) are used to detect blurry regions, from which a crack is detected.

With continued reference to Fig. 7, the algorithm uses blurriness instead of the light intensity L (therefore the concept is called CIEBab and not CIELab) . This approach is adopted in order to allow blurred regions to be grouped in different blur planes to the non-blurred regions. As the transformed CIELab concept (now CIEBab) is used to cluster pixels, the algorithm analyses "blocks of pixels" (16x16 pixels blocks are considered as an example, and pixel blocks of other sizes can be used) to determine if that block is blurry or not. The algorithm also considers a region made up of a number of blocks, as shown in Fig. 7, where in this example a region is made up of 4 blocks (each of 16x16 pixels), however the region can be made up of other numbers of blocks in other examples. Therefore, a determination is made of whether each of these 4 blocks is blurry or not. The region as a whole can then be assigned to a blurriness colour space plane having a specific degree of focus or blurriness. Thus, if all of the four blocks are determined to be blurry the region is assigned to a 100% blurry colour space plane. If three of the four blocks are determined to be blurry the region is assigned to a 75% blurry colour space plane. If two of the four blocks are determined to be blurry then the region is assigned to a 50% blurry colour space plane. If one of the blocks is determined to be blurry the region is assigned to a 25% blurry colour space plane. There is also a 0% blurry colour space plane, however there is unlikely to be a crack associated with this imagery and as such, in this situation then can be considered to be 4 colour space planes. In other examples, with a greater number of blocks (which could number up to 100) a blurriness level can be indicated as 0-100% at a fidelity level of 1%. With other numbers of blocks, again the blurriness can be indicated on a scale of 0-100% but with a level of fidelity dependent upon the number of blocks used. For each colour space planes, the image at that degree of focus or blurriness is transformed into the "ab" plane data. The net effect of this is that there is a much lower dependence of the light intensity (a blurry region remains blurry regardless of the light direction but its brightness changes with light direction change). Representation of data in a colour space plane at a particular level of blurriness or degree of focus, where data are represented in an "ab" plane is only one way of representing the colour information at that level of blurriness. Thus, CIELab can be transformed to CIEBab as discussed above. In another example, chromaticity components can be represented in cylindrical form within colour space plane rather than in a plane having the "a" and "b" axes discussed above, and therefore CIELch becomes transformed to CIEBch, where again the B relates to colour space planes at different blurriness levels. Therefore, the above discussion relates to one example only, and the fundamental aspect is the representation of colour components in an image on the basis of different blurriness levels in that image.

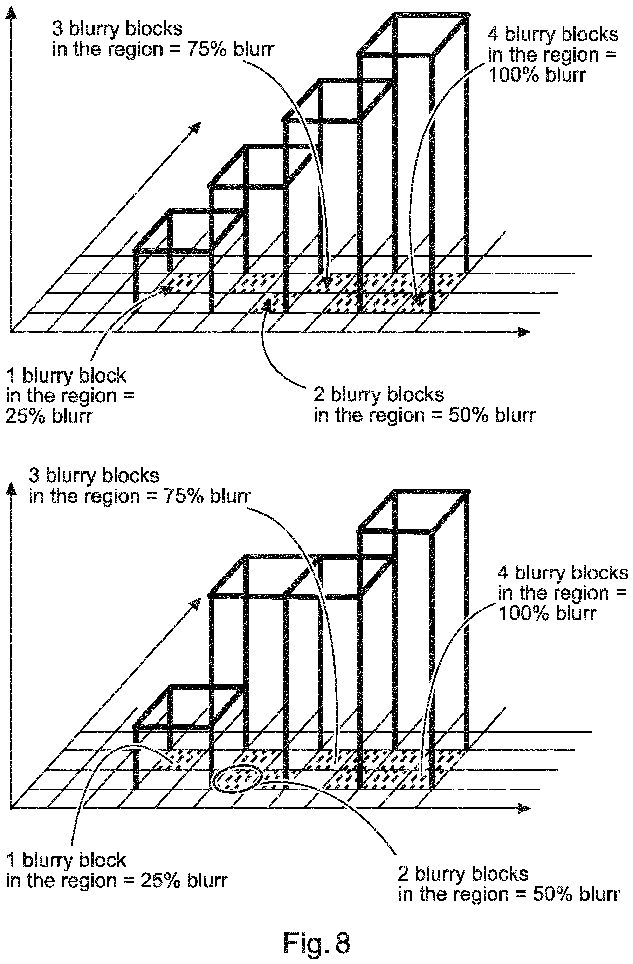

Fig. 8 represents the situation discussed above, where four regions of an image in the top frame have been determined to have different levels of blurriness, of 25%, 50%, 75% and 100% respectively and each of these regions will be assigned to different colour space planes. In the bottom frame, noise has led one 16x16 block to be determined as blurry when before it was determined as non-blurry, and as such this block has jumped vertically from the 50% blurry colour space plane to the 75% blurry colour space plane. If however the irradiation conditions have not changed (significantly), for example where the bottom frame is a frame after the top frame and the imaged scene has not substantially chnages, the colour in the pixels will not have changed significantly and as such the data in this region will occupy similar regions of the ab 50% and ab 75% colour space planes. Thus, such movement from one colour space frame to another can be tracked in order to mitigate the effect of noise in the acquired imagery.

Thus, generic image processing techniques, such as use of the Haar wavelet transform, is employed to measure the image's blurriness level. Assuming that the blurriness level ranges from 0 to 100, the number of ab planes will be large and computationally expensive. However, as explained with reference to Figs 7-8 it is possible to reduce the number of ab planes by considering intervals of the blurriness level, where in the above example the regions are formed from 4 blocks (however, this number is arbitrary) providing 4 levels of blurriness and an additional level of none blurriness. Therefore in this case there are 4 levels of blur (corresponding to one, two, three, respectively four blocks blurred). Therefore, if 4 levels (this number is application dependant) of blurriness are defined (Figs 7-8), the resulting feature for the cracked windshield detection method will have a dimension equal to 12 * 4 = 48 (12 cluster areas per colour space plane, as described with reference to Fig. 5, with 4 colour space planes at different levels of blurriness). By "feature" one understands small parallelepipeds located in between the blur arbitrary planes which act as accumulators (thus the stacked plane structure can be considered to look very similar to a Rubik cube). The net result will be a 3D representation similar to a histogram (for several regions this can be seen in Fig. 8) . At each frame the value of blurriness and the colour will place the 16x16 pixel's block in one of the small accumulators. In the cracked windshield regions only certain accumulators will retain a high value while for those in non-crack regions the accumulators will be filled uniformly at lower values. This is however one way of reducing the number of colour space planes at different levels of blurriness on the basis of whether a particular block is blurry or not, however another way is to determine an absolute level of blurriness for a block and then partition blocks into a number of different blurriness levels depending upon the absolute blurriness.

As discussed above, the image data contains noise. If a region of interest is affected by noise (image noise or weather conditions - sun glaring, fog, rain/snow, etc.), its blur may vary. Daylight and weather conditions may affect the signal to noise ratio. In case of a blurred region the signal to noise ratio may be lower than normal. In such case, some of the blocks may toggle between blurry and not blurry (because of the noise) . Such a case is discussed with reference to Fig. 8. This means that the blur moves between the horizontal blur planes. If considering such a structure (similar to a Rubik's cube), the region moves up and down in the blurred planes (in the same regions - as the colors do not change) . Looking top-down on these regions / volumes means that one will be able to filter out the image noise (in the case in which the colour does not change - meaning that the light direction does not change, and therefore a blur region does not move around laterally within a colour space plane).

The 48 small parallelepipeds will be uniform in terms of colour and blurriness level, if there is no crack. When there is a crack in the windscreen associated with acquired imagery, from the 48 clusters, the image blocks representing the crack will generally be concentrated in the top 12 accumulators of the blurriness axis. Moreover, as the cracked windshield appears either dark or bright, the block values are concentrated into mainly 2 clusters (parallelepipeds). By employing this approach in consequent frames as the car moves, the blocks belonging to a cracked windshield region will keep populating the two main clusters until a threshold is reached in terms of the number of consecutive frames having two main clusters. This threshold could be two, three, four or any number of consecutive frames. It is also to be noted, that more than two main clusters could have higher values than the other clusters, such as three, four clusters or indeed, any number of clusters that is significantly lower than the total number of clusters - which as discussed above could be significantly larger than the present example of 12.

If the light direction changes, at least some of the block's colour is expected to change. Thus in a particular colour space plane (ab plane) at a particular level of blurriness this translates into moving from some parallelepipeds (of a particular colour) to other parallelepipeds of a different colour, due to this colour change. The detection algorithm is interested in thresholding the parallelepipeds, thus it does not matter which parallelepipeds are populated but a threshold can be determined if for example 2 parallelepipeds are predominantly populated, wherever they are, and they are populated in a threshold number of consecutive frames. A determination can then be made with greater confidence when a crack has been determined to exist in at least a threshold number of consecutive frames. In other words the proposed algorithm is robust to the light direction change (such a change may happen relatively rapidly due to the street lightning which may generate a change as the car moves under the streetlamps), in addition to noise as discussed above.

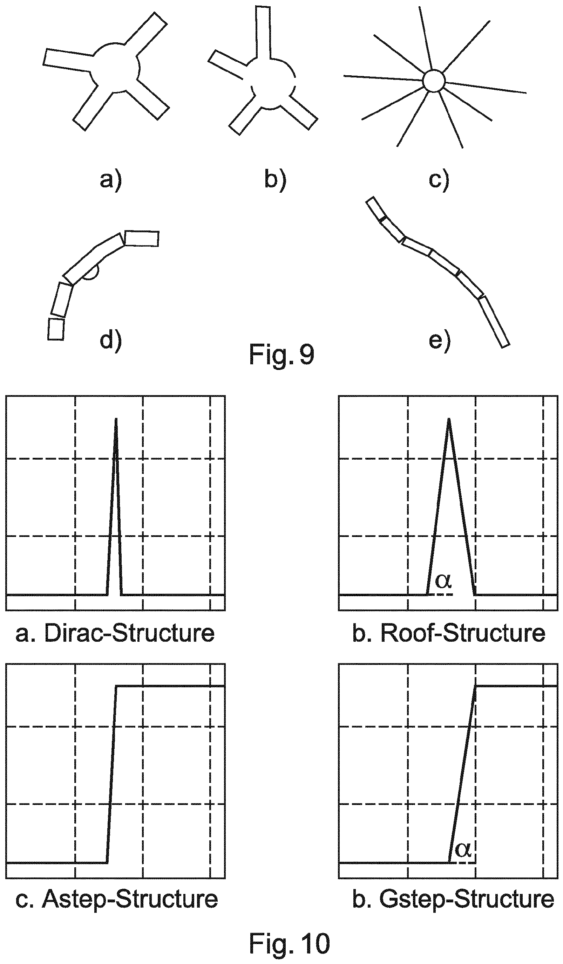

Fig. 9 shows examples of types of cracks that can occur in windscreens (windshields). In an example, the crack is a stress crack. Additionally, referring to the types of cracks shown in Fig. 9, the types of blurred regions that result from the different types of cracks are modelled, and a comparison between the acquired blurred region and the modeled data enables a determination to be made that the blurred region actually relates to a crack, and determination can be made of the type of crack. Thus, the driver can be informed that the windscreen is cracked, and if the crack type is determined to be of the type that can lead to a rapid deterioration of the windshield the driver can be appropriately warned to seek remedial action immediately. The algorithm also enables confidence levels, such as 50%, 75%, 95% of the probability of a region of dirt or of a crack being present in the windshield, and use this when relaying information to the driver. The algorithm need not work on a line by line basis, can process on an area by area basis, as would be appreciated by the skilled person. Furthermore, the image can be split up into blocks of different sizes to that described above, and analysed on a line by line basis or on an area by area basis in order to determine blurry regions.

### Image Analysis

A good way to indicate the blurriness degree is represented by the edges present in the image. Indeed, cases in which no edges may occur (examples include a dark night and / or a cloudless blue summer sky. Several types of edges are of interest in order to analyze an image's blurriness. These edges are:
the Dirac,
the Roof,
the Astep,
the Gstep

These edges can be seen in Fig. 10.

In case of an abrupt edge, high frequencies are involved. Therefore, a crystal-clear image will have edges of types Dirac and Astep. In case of limited frequencies, they become of types b) and d) - blurry. As such an image edge analysis is used to reveal information regarding the blurriness in an image.

Specifically, a Haar algorithm is used to establish the blurriness of the image. Performing a Haar wavelet transform will result in a pyramid like structure . The decomposition level in this case is 3. The image is then dividend in NxN windows/tiles, each being a power of 2 (in fact this is the reason why the block's dimensions are 16x16). A block (which is often referred to as a tile) is considered if there is a change (an edge) in horizontal, vertical or diagonal directions. However, for each of them there is a threshold. For a specific block, if the change exceeds the threshold, the said block is considered to be an edge point. Changes exceeding a threshold are considered in all directions in order to compute one value for each image (the original one plus two pyramidal images). Several rules apply once these values are found. For every block labeled an edge point, if the computed value in the original image exceeds the value computed in the level 1 image and the level 1 image exceeds the level 2 image computed value, the block is a Dirac or Astep structure, otherwise it is a GStep or Roof edge. If the first level value is greater than the other two, the block is a Roof edge. The original image value is compared with the threshold for every Gstep or Roof-edge. If lower, the block is likely to be in a blurred image. Thus the Haar analysis determines how many edges there are, and what type of edge they are (Dirac, A-step, etc), every block contains, and this can be used to determine an absolute level of blurriness for a block in order to then put that block at a certain level of blurriness or to determine if a block is blurry or not and then determine a blurriness level associated with a number n of blcoks. From this a blur value can be derived for each block or region of blocks. Further details on the Haar wavelet transform can be found in the following paper: Tong, H., Li, M. , Zhang, H., & Zhang, C. (2004, June), "Blur detection for digital images using wavelet transform", Multimedia and Expo, 2004, ICME'04, 2004 IEEE International Conference on (Vol. 1, pp. 17-20), IEEE.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining a crack on and/or within a vehicle windscreen, comprising:
- an input unit (20);
- a processing unit (30); and
- an output unit (40);
wherein, the input unit is configured to provide the processing unit with at least one image, the at least one image relating to a scene external to a vehicle viewed through a windscreen of the vehicle, and wherein the at least one image comprises colour image data;
wherein, the processing unit is configured to represent at least one portion of a plurality of portions of the at least one image as a plurality of colour space planes, wherein the plurality of colour space planes corresponds to a plurality of degrees of focus in the at least one portion of the at least one image;
wherein, the processing unit is configured to determine that a crack exists on and/or within the windscreen on the basis of a colour distribution within at least one colour space plane of the at least one portion of the plurality of portions at a degree of focus of the plurality of degrees of focus; and
wherein, the output unit is configured to output information that a crack exists on and/or within the windscreen.

2. Device according to claim 1, wherein representing the at least one portion as a plurality of colour space planes comprises dividing the at least one portion into n segments; and
wherein a determination is made if each segment of the n segments is unfocussed or in focus.

3. Device according to any of claims 1-2, wherein each one of the plurality of colour space planes is partitioned into a plurality of clusters.

4. Device according to any of claims 1-3, wherein the degree of focus of the at least one colour space plane is at a least degree of focus of the plurality of degrees of focus.

5. Device according to any of claims 1-4, wherein the at least one image comprises a first image and a second image, and
wherein a crack is determined to exist on and/or within the windscreen on the basis of a first colour distribution within a first colour space plane of a first portion of the plurality of portions at a first degree of focus of the plurality of degrees of focus in the first image and on the basis of a second colour distribution within a second colour space plane of a second portion of the plurality of portions at a second degree of focus of the plurality of degrees of focus in the second image, wherein a first position on the windscreen that correlates with the first portion in the first image is substantially the same as a second position on the windscreen that correlates with the second portion in the second image.

6. Device according to claim 5, wherein the first degree of focus of the plurality of degrees of focus in the first image is the same as the second degree of focus of the plurality of degrees of focus in the second image.

7. Device according to any of claims 5-6, wherein the first colour distribution is substantially the same as the second colour distribution.

8. Device according to any of claims 5-7, wherein each of the plurality of colour space planes of the at least one portion of the first image is partitioned into a plurality of clusters, and each of the plurality of colour space planes of the at least one portion of the second image is partitioned into the plurality of clusters; wherein the processing unit is configured to determine a position of a cluster of the first colour space plane that has a first colour distribution value in that cluster that is greater than an average value of the colour distributions in the other clusters of the first space plane; wherein the processing unit is configured to determine a position of a cluster of the second colour space plane that has a second colour distribution value in that cluster that is greater than an average value of the colour distributions in the other clusters of the second space plane; and wherein the processing unit is configured to determine that a crack exists on and/or within the windscreen on the basis that the position of the cluster of the first colour space plane that has a high value is the same as the position of the cluster of the second colour space plane that has a high value.

9. Device according to any of claims 5-8, wherein each of the plurality of colour space planes of the at least one portion of the first image is partitioned into a plurality of clusters, each cluster comprising more than one pixel, and each of the plurality of colour space planes of the at least one portion of the second image is partitioned into the plurality of clusters;
wherein the processing unit is configured to determine a plurality of colour distribution values of the plurality of clusters of the colour space planes of the at least one portion of the first image, wherein one value is associated with one cluster; wherein the processing unit is configured to determine a plurality of colour distribution values of the plurality of clusters of the colour space planes of the at least one portion of the second image, wherein one value is associated with one cluster; and the processing unit is configured to determine that a crack exists on and/or within the windscreen on the basis of at least one cluster value of the plurality of clusters of the colour space planes of the at least one portion of the first image and at least one cluster value of the plurality of clusters of the colour space planes of the at least one portion of the second image.

10. A system (100) for determining a crack on and/or within a vehicle windscreen, comprising:
- at least one camera (110);
- a device (10) for determining a crack on and/or within a vehicle windscreen according to any of claims 1-9;
wherein, the at least one camera is configured to be located within a vehicle (120) and the at least one camera is configured to acquire the at least one image relating to a scene external to the vehicle viewed through the windscreen (130) of the vehicle.

11. A method (200) for determining a crack on and/or within a vehicle windscreen, comprising:
a) providing (210) a processing unit (30) with at least one image, the at least one image relating to a scene external to a vehicle viewed through a windscreen of the vehicle, and wherein the at least one image comprises colour image data;
b) representing (220) with the processing unit at least one portion of a plurality of portions of the at least one image as a plurality of colour space planes, wherein the plurality of colour space planes corresponds to a plurality of degrees of focus in the at least one portion of the at least one image;
c) determining (230) with the processing unit that a crack exists on and/or within the windscreen on the basis of a colour distribution within at least one colour space plane of the at least one portion of the plurality of portions at a degree of focus of the plurality of degrees of focus; and
d) outputting (240) with an output unit (40) output information that a crack exists on and/or within the windscreen.

12. A computer program element for controlling an apparatus according to any one of claims 1 to 9 and/or a system according to claim 10, which when executed by a processor is configured to carry out the method of claim 11.
